# EUROPEAN PATENT APPLICATION

(11) **EP 1 628 033 A2**
(43) Date of publication of application: **22.02.2006**
(21) Application number: 05017939.9
(22) Date of filing: 18.08.2005
(51) Int. Cl.: F16D 65/097

(54) **Pad spring for opposed piston calipers**

(30) Priority: 20.08.2004 US 923430
(71) Applicant: Akebono Corporation, Farmington Hills, Michigan 48331 (US)
(72) Inventor: Barbosa, Manuel, Novi Michigan 48375 (US); Layton, Charles T., Beverly Hills Michigan 48025 (US)
(74) Representative: Müller, Thomas Michael

(57) **Abstract**

A brake caliper clip disposed between a caliper housing and a pair of brake pads. The clip includes a vertical face having a bridge member and a pair of leg members. The vertical face abuts a vertical brake pad abutment. The bridge member is disposed across a brake rotor clearance gap and said pair of leg members extend from said bridge member along each side of the brake rotor clearance gap. A spring member is connected to each of the leg members at a location distal from the bridge member. The spring member applies a force to the pair of brake pads urging the pair of brake pads towards the bridge member. The brake caliper clip both holds the brake pads in place and reducing sliding friction between the vertical brake pad abutment and the pair of brake pads.

## Description

### FIELD

The present invention relates to a disc brake system and more particularly to a pad clip with a spring for an opposed piston caliper.

### BACKGROUND

An opposed piston caliper typically includes pins or rails upon which a pair of brake pads travel to clamp against a rotor. More specifically, a pair of apertures is formed on a caliper housing and associated apertures are formed on each of the brake pads. A pin is inserted through one of the apertures formed on one side of the caliper, through each of the apertures on the brake pads respectively, and then through an opposed aperture on the other side of the caliper. When the caliper clamps against the rotor to slow a moving vehicle, the pair of brake pads slide along the pin and clamp against the rotor.

To reduce vibration in the caliper, for example, between the brake pads and the caliper housing, the respective apertures formed in each of the brake pads and the caliper housing can have almost equal diameters when compared to a diameter of the pin. The little difference between the diameter of the pin and the diameters of the respective apertures produces a tight fit. With the tight fit between the pin and the respective apertures of the brake pad and caliper housing, there may be reduced relative motion, thus reduced vibration, between the brake pads and the caliper housing. With the tight fit, however, there may be an increased likelihood of corrosion between the pin and the respective apertures of the disc brakes and caliper.

Some exemplary opposed piston calipers are configured with the respective apertures having larger diameters relative to the pin diameter. A larger difference between the pin diameter and the diameter of the respective apertures produces a loose fit. While the loose fit may decrease the likelihood of corrosion, the loose fit may introduce increased vibration between the components. To reduce the noise and vibration created by the relative motion between the brake pads, the caliper housing and the pin, a spring can be introduced to apply a biasing force on the brake pads. The spring is in addition to pad clips that are already installed in the caliper assembly to reduce sliding friction between the caliper housing and the brake pads.

Some exemplary opposed piston calipers are configured with mechanical stops formed in the caliper housing to prevent the disc brakes from falling through the caliper and out of position. The mechanical stop may require increased complexity when manufacturing the caliper housing because, for example, increased curvature in an interior of the caliper housing. Additional and numerous components and complex curvatures within the caliper housing may cause increased cost and complexity.

### SUMMARY

A brake caliper clip is disposed between a caliper housing and a pair of brake pads. The clip includes a vertical face having a bridge member and a pair of leg members. The vertical face abuts a vertical brake pad abutment. The bridge member is disposed across a brake rotor clearance gap and the pair of leg members extends from the bridge member along each side of the brake rotor clearance gap. A spring member is connected to each of the leg members at a location distal from the bridge member. The spring member applies a force to the pair of brake pads urging the pair of brake pads towards the bridge member.

Further areas of applicability of the present invention will become apparent from the detailed description provided hereinafter. It should be understood that the detailed description and the specific examples, while indicating the various embodiments of the invention, are intended for purposes of illustration only and are not intended to limit the scope of the invention.

### BRIEF DESCRIPTION OF THE DRAWINGS

The present invention will become more fully understood from the detailed description, the appended claims and the accompanying drawings, wherein:
Figure 1 is a perspective view showing a top of a caliper assembly constructed in accordance with the teachings of the present invention;
Figure 2 is a portion of a perspective view of the caliper from Figure 1 showing a vertical pad abutment face within an interior of the caliper;
Figure 3 is a perspective view of the bottom of the caliper from Figure 1 showing a pair of clips with spring portions constructed in accordance with the teachings of the present invention;
Figure 4A is a cross-sectional view of the caliper of Figure 1 showing a disc brake pad, a caliper pin and the pair of clips in a service position;
Figure 4B is a cross-sectional view of the caliper of Figure 1 showing a disc brake pad, a caliper pin and the pair of clips in an installation position;
Figure 5 is an exploded assembly view of the caliper from Figure 1; and
Figure 6 is a perspective view of one of the clips constructed in accordance with the teachings of the present invention.

### DETAILED DESCRIPTION OF THE VARIOUS EMBODIMENTS

The following description of the various embodiments is merely exemplary in nature and is in no way intended to limit the invention, its application, or uses.

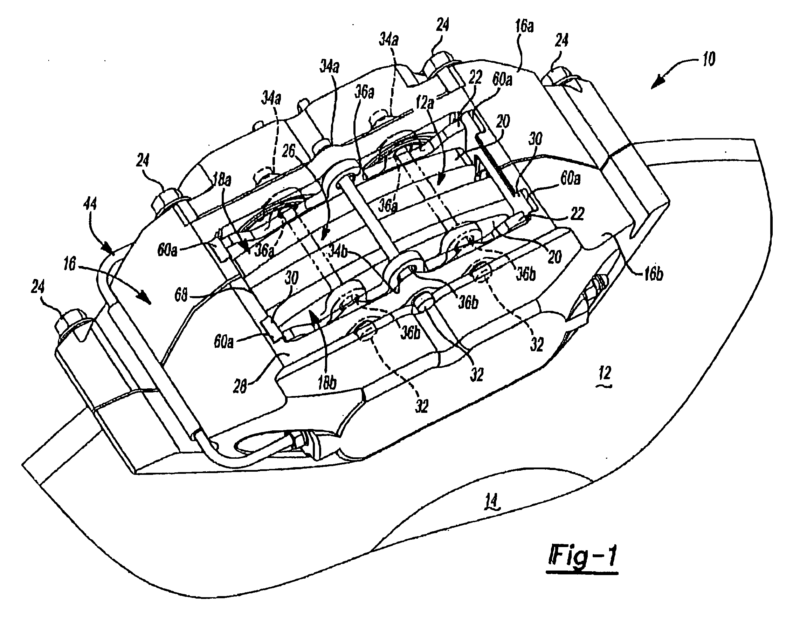

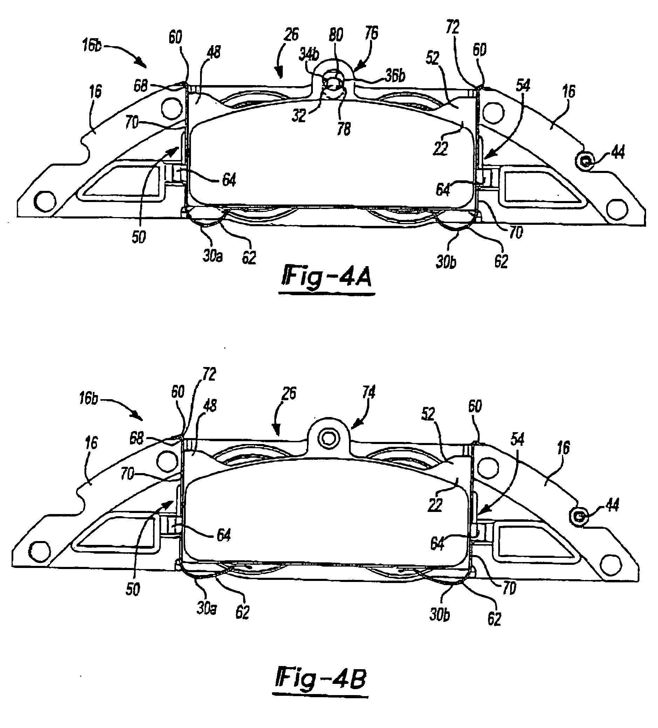

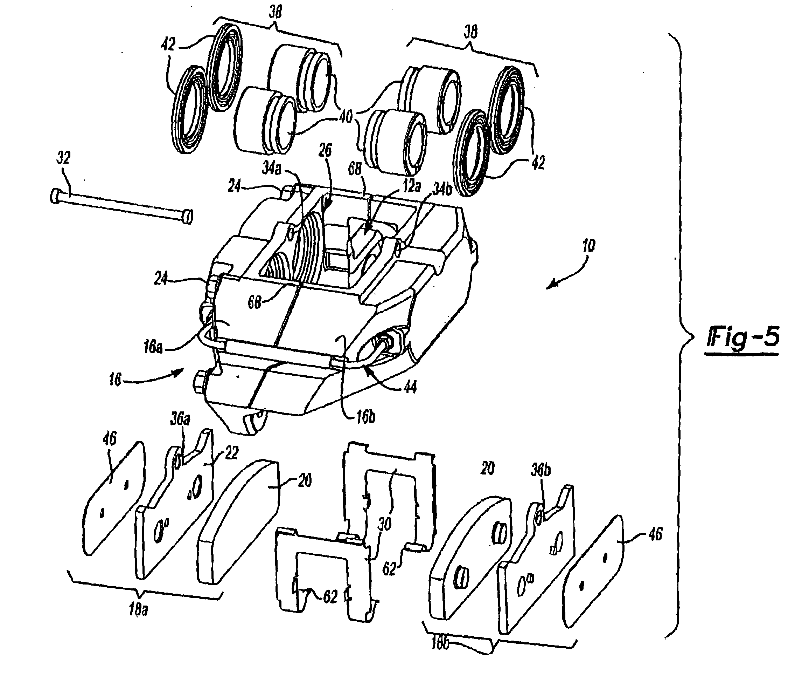

In Figure 1 and Figure 5, the various embodiments of the present invention are shown with reference to a caliper assembly generally indicated by reference numeral 10. A rotor 12 having a hub 14 is configured to fit into a caliper housing 16 in a rotor clearance gap 12a (Figure 3). The caliper assembly 10 also includes an inboard brake element 18a and an outboard brake element 18b, collectively referred to hereinafter as brake elements 18, brake pads 18 or disc brakes 18. It will be appreciated that other exemplary brake system features, which may be incorporated with the present invention, are shown in commonly assigned U. S. Patent No. 6,286,636, issued September 11, 2001, titled "Disc Brake" and commonly assigned co-pending United States Patent Application Serial Number 10/395,925, filed March 24, 2003, titled "One Piece Sliding Brake Caliper", both of which are incorporated by reference as if fully set forth herein.

The brake elements 18 include a friction member 20 that is connected to a structural backing 22. It will be appreciated that the friction member 20 is the portion of the brake element 18 that makes contact with the rotor 12 and ultimately shows the motion of the vehicle (not shown). Contact with the rotor 12 causes the friction member 20 to heat and wear in the form of gas and debris. The friction member 20 can be configured in various shapes and thicknesses, mounted in various ways on the structural backing 22 and prepared with various formulations. Exemplary shapes of the friction member 20 that may be incorporated into the present invention are disclosed in commonly assigned and co-pending United States Patent Application titled Friction Materials Configuration and Method for Manufacture for Brake Applications, United States Patent Application Serial Number 10/696,934, filed October 30, 2003. Exemplary formulations of the friction member, which can be used with the present invention, are disclosed in commonly assigned and co-pending United States Patent Application titled Brake Friction Material Including Titanium Dioxide Particles, application serial number 10/345,713, filed January 16, 2003. Exemplary mounting methods, which may be used with the present invention, are disclosed in commonly assigned United States Patent No. 5,073,099, titled Hot Press for Heat Forming a Disc Pad, issued December 17, 1991, all of which are hereby incorporated by reference as if fully set forth herein.

The caliper housing 16 can include two housing portions, an inboard side 16a and an outboard side 16b that can be fastened together with suitable fasteners 24. Formed between the two housing portions 16a, 16b, is an access opening 26 located on a top 28 of the caliper housing 16. A pair of pad clips 30 and a pair of the brake pads 18 can be inserted through the access opening 26 and positioned within the caliper housing 16.

The caliper housing 16 can additionally include a pin 32 that is positioned between the caliper housing 16 and the brake pads 18. More specifically, caliper apertures 34 are formed on the respective sides of the caliper housing 16 and pad apertures 36 are formed on each of the brake pads 18. In an exemplary configuration, the pin 32 is inserted through an inboard caliper aperture 34a formed on the inboard side 16a of the caliper housing 16. The pin 32 continues through an inboard pad aperture 36a of the inboard brake pad 18a and then through an outboard brake pad aperture 36b of the outboard brake pad 18b. From the outboard pad aperture 36b, the pin 32 continues through the outboard caliper aperture 34b formed on the outboard side 16b of the caliper housing 16.

It will be appreciated that the pin 32 can be configured to be inserted from the outboard side 16b through to the inboard side 16a or in the reverse from the inboard side 16a through to the outboard side 16b. It will also be appreciated that in other exemplary configurations of the present invention, a plurality of pins 32 can be used with the caliper assembly 10 such that additional apertures 34a, 34b, 36a and 36b can be formed on the caliper housing 16 and the brake pads 18 respectively to accommodate two or more of the pins 32, as shown in phantom in Figure 1.

With reference to Figure 5, the caliper housing 16 also includes two or more pistons 38 that are opposed to one another. The pistons 38 include a piston face 40 and a seal ring 42, which seals the pistons 38 within the caliper housing 16. Brake fluid, which is delivered to the pistons 38 through a hydraulic delivery system 44, urges the pistons 38 toward the rotor. More specifically, outboard pistons 38b are contained within the outboard side 16b of the caliper housing 16, while inboard pistons 38a are contained within the inboard side 16a of the caliper housing 16. The pistons 38a, 38b urge the respective brake pads 18a, 18b to which they are connected toward the rotor 12, thus making contact with the rotor 12 and slovang the vehicle (not shown). It will be appreciated that a plurality of pistons 38 can be used on each of the inboard side 16a or the outboard side 16b of the caliper housing 16. For example, the caliper assembly 10 can have an exemplary configuration that includes four pistons 38, two pistons 38 on the inboard side 16a and two pistons 38 on the outboard side 16b. It will be additionally appreciated that the plurality of the pistons 38 that can be configured within the caliper housing 16 can vary such that there need not be an equal amount of the pistons 38 on each side of the caliper housing 16, nor do the pistons 38 need to be equally sized or spaced.

The pistons 38 can be connected to shims 46, which are connected to the brake pads 18. The shims 46 can also be connected to the structural backing opposite the friction material 20. The shims 46 can be releaseably connected to the structural backing 22, while the friction material 20 can be fixedly connected to the structural backing 22. The shims 46 can provide an intermediate member that, for example, reduces the likelihood of corrosion between the pistons 38 and the structural backing 22.

With reference to Figures 3, 4A and 4B, the caliper assembly 10 includes the clips 30 that can be positioned between the brake pads 18 and the caliper housing 16. A forward clip 30a and a rear clip 30b can be positioned in the access opening 26 with a pair of the brake pads 18. A forward edge 48 of each brake pad 18 abuts the forward clip 30a which sits in a forward position 50 in the caliper housing 16. Likewise, a rear edge 52 of each brake pad 18 abuts the rear clip 30b, which is situated in a rear position 54 of the caliper housing 16. The clips 30a, 30b position the brake pads 18 within the caliper housing 16.

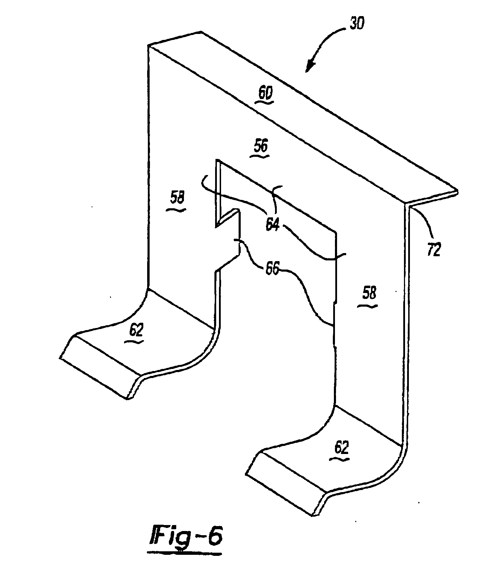

With reference to Figure 6, one of the clips 30 includes a bridge member 56 to which a pair of downward projecting leg members 58 is attached. It will be appreciated that downward projecting refers to a general radial direction toward the center of the rotor 12 (Figure 1). A lip member 60 is also connected to the bridge member 56. A spring member 62 is connected to each of the pair of leg members 58 that are connected to the bridge member 56. A vertical face 64 includes the bridge member 56 and the pair of the leg members 58. The spring members 62 and the lip member 60 are generally positioned orthogonal to the vertical face 64 but in opposite directions. When the spring members 62 are compressed as shown in Figure 4b, the spring members 62 apply a force that is generally in the direction toward the bridge member 56, which is otherwise in a direction radial outward from the center of the rotor 12 (Figure 1). Positioning tabs 66 can assist in positioning the clips 30 in the caliper housing 16 (Figure 1).

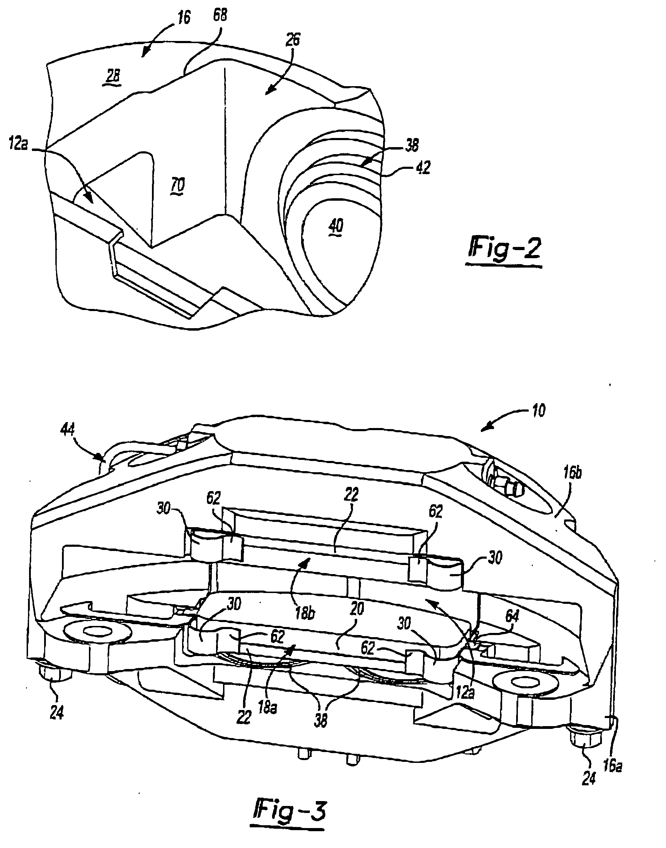

With reference to Figures 1, 4A and 4B, the clips 30a, 30b are placed in through the access opening 26 of the caliper housing 16. The lip member 60 of the clips 30 rests upon an access opening edge 68 that is formed from portions of the caliper housing 16 including the top 28 and a vertical pad abutment 70 (Figure 2). The lip member 60 connects with the bridge member 56 in a generally orthogonal manner forming a corner 72 that resides on the access opening edge 68. It will be appreciated that the lip member 60 can be continuous along the bridge member 56, as shown in Figure 6 or may be configured as a plurality of discontinuous lip portions 60a, as shown in Figure 1.

The bridge member 60, the pair of downwardly extending leg members 58 and the spring members 62 are positioned within an interior of the caliper housing 16. More specifically, portions of the bridge member 56 and the pair of the leg members 58 can abut the vertical pad abutment 70. The spring members 62, connected to the pair of downward projecting leg members 58, can extend in a direction generally orthogonal to the leg members 58 and otherwise orthogonal to the vertical pad abutment 70. It will be appreciated that the brake pads 18 are inserted into the caliper assembly 10 through the access opening 26 and the clips 30 are disposed between the vertical pad abutment face 70 and the brake pads 18. In this arrangement, the brake pads 18 fall into the access opening 26 but stop as they contact the spring members 62, as shown in Figure 3. The pair of the leg members 58 can provide reduced sliding resistance between the brake pads 18 and the vertical pad abutment 70 (Figure 2). It will be appreciated that the brake pads 18 when clamping a spinning rotor 12, will exert additional tangential forces on the vertical pad abutment 70.

In the various embodiments of the present invention, the spring member 62 is used in lieu of a machined stop in the caliper housing 16, such that the spring members 62 prevent the brake pads 18 from falling out of position in the caliper housing 16. It will be appreciated that the omission of the machined stops may make the fabrication of the vertical pad abutment 70 less costly and complex because the pad abutment 70 can be made completely vertical. With the clips 30 disposed in the access opening 26, the brake pads 18 can be inserted through the access opening 26 and thus come to rest in a position supported by the spring members 62 of the clips 30.

It will be appreciated that the vertical pad abutment 70 need not be vertical with respect to the caliper housing or the rotor. The vertical pad abutment in the various embodiments of the present invention can be planar such that it has a flat topography. It will be appreciated that the flat topography is less complex thus easier to manufacture than a topography with additional curvature. Nevertheless, the pad abutment can include flanges or stops that can further hold and/or position the pair of brake pads 18. It will further be appreciated that the vertical pad abutment need only be vertical where the abutment contacts the vertical face 64 of the clips 30.

With reference to Figure 4B, the brake pads 18 can be pressed into the interior of the caliper housing 16 in a radial direction toward the center of the rotor 12 (Figure 1) such that the spring members 62 are elongated. With the spring members 62 elongated, the brake pad apertures 36a, 36b can now be aligned in a generally coaxial position with the caliper apertures 34a, 34b in an installation position 74. In the installation position 74, the pin 32 can be passed through the respective apertures 34a, 34b, 36a and 36b. After the pin 32 is inserted through the respective apertures 34a, 34b, 36a and 36b, the brake pads 18 move to a service position 76 as shown in Figure 4A. It will be appreciated the spring members 62 can exert less force on the brake pads 18 in the service position 76 than in the installation position 74.

With reference to Figure 4A, the brake pads 18 are shown in the service position 76. In the service position 76, the spring members 62 are elongated and pushing up in a radial direction away from the center of the rotor 12 (Figure 1) against the brake pads 18. It will be appreciated that the spring members 62 are elongated and thus applying a spring force in both the service position 76 and the installation position 74, but there may be less spring force applied in the service position 76. In the service position 76, a bottom 78 of the brake pad aperture 36a, 36b can press against the pin 32 and the pin 32 can press against a top 80 of the caliper aperture 34a, 34b. With the spring member pushing the brake pad 18 against the pin 32 and further against the caliper aperture 34a, 34b, the components of the caliper housing 16 are held in position thus reducing noise and vibration due to relative motion between the components.

The diameters of the caliper apertures 34a, 34b and the brake pad apertures 36a, 36b can be oversized when compared to the diameter of the pin 32 configured to be inserted into the respective apertures 34a, 34b, 36a and 36b. The over-sizing of apertures 34a, 34b, 36a and 36b relative to the pin 32 diameter reduces the likelihood of corrosion between the pin 32 and the apertures 34a, 34b, 36a, and 36b. The possibility that noise and vibration will increase due to the larger diameter of the pin 32 relative to the diameter of the apertures 34a, 34b, 36a and 36b is also reduced. This is due to the clips 30 applying a biasing force against the brake pads 18 to hold them securely in the caliper assembly 10. As such, the clips 30 can provide reduced vibration and friction between the brake pads 18 and the caliper housing 16 and can also provide proper positioning within the caliper housing 16, without the need of additional parts or complex curvatures within the caliper housing.

The description of the invention is merely exemplary in nature and, thus, variations that do not depart from the gist of the invention are intended to be within the scope of the invention. Such variations are not to be regarded as a departure from the spirit and scope of the invention.

## Claims

1. A brake caliper clip disposed between a caliper housing and a pair of brake pads, the clip comprising:
a vertical face having a bridge member and a pair of leg members, said vertical face abuts a vertical brake pad abutment, said bridge member is disposed across a brake rotor clearance gap and said pair of leg members extend from said bridge member along each side of the brake rotor clearance gap; and
a spring member connected to each of said leg members at a location distal from said bridge member, each said spring member applying a force to a respective one of the brake pads urging the brake pads toward said bridge member.

2. The clip of Claim 1 further comprising a lip member connected generally orthogonal to said bridge member wherein said lip member connects with a top of the caliper housing.

3. The clip of Claim 1 further comprising a pin disposed through the caliper housing and the pair of brake pads.

4. The clip of Claim 3 further comprising a plurality of caliper apertures formed from the caliper housing, each aperture having a caliper aperture diameter that is larger than a pin diameter such that there is a loose fit between said caliper apertures and said pin.

5. The clip of Claim 3 further comprising a plurality of caliper apertures formed from the caliper housing, each aperture is larger than said pin such that there is a loose fit between said caliper apertures and said pin.

6. The clip of Claim 3 further comprising a plurality of brake pad apertures formed from a structural backing, each of said apertures having a brake pad aperture diameter that is larger than a pin diameter such that there is a loose fit between the brake pad apertures and said pin.

7. The clip of Claim 3 further comprising a plurality of brake pad apertures formed from a structural backing, each of said apertures is larger than said pin such that there is a loose fit between said brake pad apertures and said pin.

8. The clip of Claim 1 further comprising a plurality of pins disposed in a plurality of caliper apertures formed from the caliper housing and a plurality of brake pad apertures formed from the brake pads.

9. The clip of Claim 1 further comprising a plurality of pistons disposed in the caliper housing, wherein at least one piston of said plurality of pistons is opposed to at least one other piston of said plurality of pistons.

10. The clip of Claim 2 wherein said lip member and said vertical face form a corner portion that is connected to an access opening edge formed by said vertical pad abutment and said top of the caliper housing.

11. The clip of Claim 1 wherein said lip member includes a plurality of discontinuous lip portions that are generally orthogonal to said vertical face.

12. The clip of Claim 1 further comprising a position tab connected to said vertical face.

13. The clip of Claim 12 wherein said position tab is generally orthogonal to said vertical face and connects to the caliper housing.

14. The clip of Claim 1 further comprising a service position wherein said spring member applies a force to the pair of brake pads generally toward said bridge member.

15. The clip of Claim 1 further comprising an installation position wherein said spring member applies a force to the pair of brake pads greater than in a service position.

16. The clip of Claim 15 further comprising a brake pad aperture and a caliper aperture, wherein said brake pad aperture and said caliper aperture are substantially coaxial in said installation position such that a pin can be inserted in said brake pad aperture and said caliper aperture.

17. The clip of Claim 3 further comprising a service position wherein each said spring member applies a force to the respective brake pads, urging the brake pads toward said pin and said pin toward the caliper housing.

18. The clip of Claim 17 wherein said spring member in said service position urges a bottom of a brake pad aperture against said pin, said pin toward a top of a caliper aperture.

19. A brake caliper assembly that clamps a pair of brake pads against a brake rotor to slow a vehicle, the assembly comprising:
a caliper housing having a brake rotor clearance gap adapted to fit over the brake rotor and a vertical brake pad abutment adapted to receive tangential forces from the pair of brake pads during braking;
a pin disposed through said caliper housing and the pair of brake pads; a clip including
a vertical face having a bridge member and a pair of leg members, wherein said vertical face abuts said vertical brake pad abutment, said bridge member disposed across said brake rotor clearance gap and said pair of leg members extending downward from said bridge member along each side of said brake rotor clearance gap;
a lip member connected generally orthogonal to said bridge member wherein said lip member connects with a top of said caliper housing; and
a spring member connected to each of said leg members at a location distal from said bridge member, each said spring member applying a force to a respective one of the brake pads urging said brake pads against and toward said bridge member.

20. The caliper assembly of Claim 19 further comprising a plurality of caliper apertures formed from said caliper housing, each aperture having a caliper aperture diameter larger than a pin diameter such that there is a loose fit between the caliper aperture and said pin.

21. The caliper assembly of Claim 19 further comprising a plurality of brake pad apertures formed from a structural backing, each aperture having a brake pad aperture diameter larger than a pin diameter such that there is a loose fit between the brake pad aperture and said pin.

22. The caliper assembly of Claim 19 further comprising a plurality of pins disposed in a plurality of caliper apertures and a plurality of brake pad apertures.

23. The caliper assembly of Claim 19 further comprising a plurality of pistons disposed in said caliper housing, wherein at least one piston of said plurality of pistons is opposed to at least one other piston of said plurality of pistons.

24. The caliper assembly of Claim 19 wherein said lip member and said vertical face form a corner portion that is connected to an access opening edge formed by said vertical pad abutment and said top of said caliper housing.

25. The caliper assembly of Claim 19 further comprising a brake pad aperture and a caliper aperture, wherein said brake pad aperture and said caliper aperture are substantially coaxial in an installation position such that said pin can be inserted in said brake pad aperture and said caliper aperture.

26. The caliper assembly of Claim 19 further comprising a service position wherein said spring member applies a force to the pair of brake pads, urging the pair of brake pads toward said pin and said pin toward the caliper housing.

27. The caliper assembly of Claim 26 wherein said spring member in said service position urges a bottom of a brake pad aperture against said pin, said pin toward a top of a caliper aperture.

28. A method of holding a pair of brake pads in a caliper housing with a pair of clips and a pin, the method comprising:
inserting the pair of clips in an access opening in the caliper housing;
inserting a pair of brake pads in said access opening;
pressing the pair of brake pads against a spring force from the pair of clips;
aligning a plurality of assembly apertures on the caliper housing and the brake pads in an installation position;
inserting the pin through said plurality of assembly apertures; and
returning the brake pads to a service position.
